# EUROPEAN PATENT APPLICATION

(11) **EP 4 604 278 A1**
(43) Date of publication of application: **20.08.2025**
(21) Application number: 24206588.6
(22) Date of filing: 15.10.2024
(51) Int. Cl.: H01M 50/103, H01M 50/188, H01M 50/528, H01M 50/531, H01M 50/548, H01M 50/557, H01M 50/566

(54) **CAP ASSEMBLY AND SECONDARY BATTERY INCLUDING A CAP ASSEMBLY**

(30) Priority: 19.02.2024 KR 20240023744
(71) Applicant: Samsung SDI Co., Ltd, Gyeonggi-do 17084 (KR)
(72) Inventor: Kim, Jihwan, Yongin-Si, Gyeonggi-do 17084 (KR); Yong, Jun-Sun, Yongin-Si, Gyeonggi-do 17084 (KR); Bae, Kwangsoo, Yongin-Si, Gyeonggi-do 17084 (KR); Lee, Junhyung, Yongin-Si, Gyeonggi-do 17084 (KR); Roh, Heyoungcheoul, Yongin-Si, Gyeonggi-do 17084 (KR); Bae, Chaeeun, Yongin-Si, Gyeonggi-do 17084 (KR); Lee, Jungwoo, Yongin-Si, Gyeonggi-do 17084 (KR)
(74) Representative: Gulde & Partner

(57) **Abstract**

A secondary battery includes an electrode assembly, a subplate connected to the electrode assembly, a current collector including a planar portion coupled to the subplate A protruding portion protrudes from the planar portion, and a tab portion is provided on a side surface of the protruding portion. A terminal plate configured to includes a recessed portion in a shape that corresponds to the tab portion.

## Description

### BACKGROUND

### 1. Field

Aspects of embodiments of the present disclosure relate to a cap sub assembly and a secondary battery including a cap sub assembly.

### 2. Description of the Related Art

A secondary battery refers to a rechargeable battery that may be charged and discharged a plurality of times. Such secondary batteries are mainly used in various applications such as electronics (e.g., smartphones, laptops, and tablets), electric vehicles, solar power generation, and emergency power supplies. In particular, lithium (Li)-ion batteries are used in various electronic products and electric vehicles due to their high energy density and high charge and discharge efficiency.

Secondary batteries may be categorized as cylindrical secondary batteries, prismatic secondary batteries, and pouch secondary batteries, depending on the shape of the case. A prismatic secondary battery has a structure in which an electrode assembly is embedded in a cylindrical metal can. The electrode assembly is inserted into the prismatic metal can, and the can is sealed by welding a cap plate. However, when there is a poor fit between a current collector and a terminal plate, the electrical characteristics of the secondary battery may be degraded.

The above information disclosed in this Background section is for enhancement of understanding of the background of the present disclosure, and therefore, it may include information that does not constitute related (or prior) art.

### SUMMARY

An aspect of the present disclosure is to provide a cap assembly and a secondary battery configured to solve at least one of the above-described problems.

These and other aspects and features of the present disclosure will be described in or will be apparent from the following description of embodiments of the present disclosure.

According to some embodiments of the present disclosure, a secondary battery comprises an electrode assembly, a subplate connected to the electrode assembly, a current collector including a planar portion coupled to the subplate, a protruding portion protruding from the planar portion, and a tab portion provided on a side surface of the protruding portion, and a terminal plate including a recessed portion in shape that corresponds to a shape of the tab portion.

In some embodiments, wherein the tab portion and the recessed portion may be fitted to each other.

In some embodiments, an upper surface of the protruding portion may be in contact with the terminal plate.

In some embodiments, an upper surface of the terminal plate may comprise an area welded with the protruding portion.

In some embodiments, the protruding portion may have a cylindrical shape, the tab portion may have a ring shape, and a diameter of the protruding portion is less than a diameter of the tab portion.

In some embodiments, the terminal plate may cover an upper surface of the protruding portion.

In some embodiments, a hole may be formed in the terminal plate, and a portion of an upper surface of the protruding portion is exposed through the hole.

In some embodiments, the secondary battery further may comprise a case accommodating the electrode assembly, the case including an open first side and an open second side opposite the first side, a first cap plate covering the first side of the case, and a second cap plate covering the second side of the case, wherein a through-hole is formed in the first cap plate, and the protruding portion extends through the through-hole.

In some embodiments, the case may comprise, a first long sidewall and a second long sidewall facing and spaced apart from each other, a first short sidewall and a second short sidewall facing and spaced apart from each other, areas of the first and second short sidewalls are less than areas of the first and second long sidewalls.

According to some embodiments of the present disclosure, a secondary battery comprises, an electrode assembly, a case accommodating the electrode assembly, the case including an open first side and an open second side opposite the first side, a first subplate assembly and a second subplate assembly electrically connected to opposite sides of the electrode assembly, a first cap assembly covering the first side of the case and coupled to the first subplate assembly, and a second cap assembly covering the second side and coupled to the second subplate assembly, wherein the first cap assembly comprises a first cap plate and a first terminal plate coupled to the first cap plate, the first terminal plate including a first recessed portion, the first subplate assembly comprises a first subplate and a first current collector coupled to a surface of the first subplate, and the first current collector comprises a first protruding portion and a first tab portion provided on the first protruding portion, and wherein the protruding portion is coupled to the recessed portion.

In some embodiments, the second cap assembly may comprise a second cap plate and a second terminal plate coupled to the second cap plate, the second terminal plate including a second recessed portion, the second subplate assembly may comprise a second subplate and a second current collector coupled to a surface of the second subplate, and the second current collector may comprise a second protruding portion and a second tab portion, and wherein the second tab portion is coupled to the second recessed portion.

In some embodiments, the second terminal plate may comprise an upper terminal plate and a lower terminal plate, and the upper terminal plate and the lower terminal plate may comprise different materials.

In some embodiments, the second terminal plate may comprise an upper terminal plate and a lower terminal plate, and the second recessed portion is provided inside the upper terminal plate.

In some embodiments, the second terminal plate may comprise an upper terminal plate and a lower terminal plate, and the second protruding portion may extend through the lower terminal plate.

In some embodiments, the first cap assembly may further comprise a sealing member disposed between the first cap plate and the first terminal plate.

In some embodiments, the first terminal plate and the first protruding portion may be coupled to each other by welding.

In some embodiments, the case may comprise a first long sidewall and a second long sidewall facing each other and spaced apart from each other, and a first short sidewall and a second short sidewall facing each other and spaced apart from each other, wherein areas of the first and second short sidewalls may be less than areas of the first and second long sidewalls.

In some embodiments, the secondary battery may further comprise a vent provided on a surface of the case.

According to some embodiments of the present disclosure, a cap assembly configured to be coupled to a current collector that includes a tab portion, the cap assembly may comprise, a cap plate, a sealing member coupled to the cap plate, and a terminal plate coupled to the sealing member, wherein the terminal plate comprises a recessed portion in a shape that corresponds to a shape of the tab portion.

In some embodiments, the terminal plate may comprise an upper terminal plate and a lower terminal plate, and the upper terminal plate and the lower terminal plate comprise different materials.

According to embodiments of the present disclosure, the fit between the current collector and the terminal plate may be improved and the reliability of the secondary battery may be improved by using the current collector having a tab portion and the terminal plate having a recessed portion.

According to embodiments of the present disclosure, the capacitor and the terminal plate may be fixed, and the electrical characteristics of the secondary battery may be stably maintained by fitting the current collector having a tab portion and the terminal plate having an recessed portion to each other.

According to embodiments of the present disclosure, whether the collector and the terminal plate are tightly fitted to each other may be checked using the hole of the terminal plate, thereby reducing defects in the manufacturing process.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective diagram showing a secondary battery according to some embodiments of the present disclosure;
FIG. 2 illustrates a cross-sectional diagram showing the secondary battery according to some embodiments of the present disclosure;
FIG. 3 illustrates a perspective diagram showing a case according to some embodiments of the present disclosure;
FIG. 4 illustrates an enlarged diagram showing a region R1 in FIG. 2;
FIG. 5 illustrates a diagram in which the first cap assembly and the first subplate assembly in FIG. 4 are separated from each other
FIG. 6 illustrates an enlarged diagram showing a region R2 in FIG. 2;
FIG. 7 illustrates a diagram in which the second cap assembly and the second subplate in FIG. 7 are separated from each other;
FIG. 8 illustrates the secondary battery according to some embodiments of the present disclosure;
FIG. 9 illustrates the secondary battery according to some embodiments of the present disclosure;
FIG. 10 illustrates a perspective diagram showing a secondary battery according to some embodiments of the present disclosure;
FIG. 11 illustrates a cross-sectional diagram showing the secondary battery according to some embodiments of the present disclosure.
FIGS. 12 and 13 illustrate a method of manufacturing a secondary battery according to some embodiments of the present disclosure.

### DETAILED DESCRIPTION OF THE EMBODIMENTS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

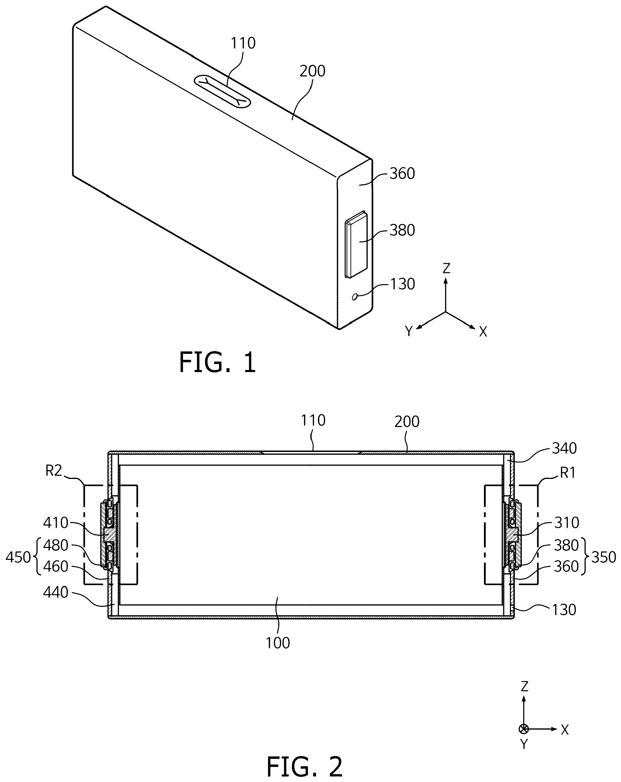

FIG. 1 illustrates a perspective diagram showing a secondary battery according to some embodiments of the present disclosure. FIG. 2 illustrates a cross-sectional diagram showing the secondary battery according to some embodiments of the present disclosure.

Referring to FIGS. 1 and 2, the secondary battery may include an electrode assembly 100, a case 200 including the electrode assembly 100, a first subplate assembly 310, a second subplate assembly 410, a first cap assembly 350, and a second cap assembly 450.

The first subplate assembly 310 may be coupled to a first side of the electrode assembly 100 and may be electrically connected to a first electrode plate (e.g., a positive electrode plate) of the electrode assembly 100. The first subplate assembly 310 may include a first subplate 320 and a first current collector 330.

The second subplate assembly 410 may be coupled to a second side of the electrode assembly 100 and may be electrically connected to a second electrode plate (e.g., a negative electrode plate) of the electrode assembly 100. The second subplate assembly 410 may include a second subplate 420 and a second current collector 430.

The electrode assembly 100 may be accommodated in the case 200. The electrode assembly 100 may be provided by winding or stacking a laminate including a first electrode plate (not shown), a separator (not shown), and a second electrode plate (not shown), each of which may be formed as a thin plate or film. When the electrode assembly 100 is a wound laminate, the axis of the winding may be parallel to the longitudinal direction of the case 200. The electrode assembly 100 may be a stack type instead of being a wound type, but the shape of the electrode assembly 100 of the present disclosure is not limited thereto. In addition, the electrode assembly 100 may be a Z stack electrode assembly in which a positive electrode plate and a negative electrode plate are provided on opposite sides of the separator bent as a Z stack. One or more electrode assemblies 100 may be stacked so that the long sides thereof are adjacent to each other so as to be received in the case 200. The present disclosure is not limited with respect to the number of electrode assemblies 100. In the electrode assembly 100, the first electrode plate may act as a positive electrode, and the second electrode plate may act as a negative electrode. The reverse is also possible.

The first electrode plate may be formed by applying a first electrode active material, such as graphite or carbon, to a first electrode collector plate formed of a metal foil such as, for example, copper (Cu), a Cu alloy, nickel (Ni), or a Ni alloy. The first electrode plate may include a first electrode tab (or a first uncoated portion), which is a region to which the first electrode active material is not applied. The first electrode tab may form a path for current flow between the first electrode plate and the first subplate assembly 310. In some examples, the first electrode tab may be formed by cutting the first electrode plate so that the first electrode tab protrudes from a first side when the first electrode plate is fabricated, and the first electrode tab may protrude further from the first side than the separator without additional cutting.

The second electrode plate is formed by applying a second electrode active material, such as a transition metal oxide, to a second electrode collector plate formed of a metal foil such as, for example, Al or an Al alloy, and may include a second electrode tab (or a second uncoated portion), which is a region to which the second electrode active material is not applied. The second electrode tab form a path for current flow between the second electrode plate and the second subplate assembly 410. In some examples, the second electrode tab may be formed by cutting the second electrode plate so that the second electrode tab protrudes from a second side when the second electrode plate is fabricated, and the second electrode tab may protrude further from the second side than the separator without additional cutting.

In some examples, the first electrode tab may be positioned on the right end side of the electrode assembly, and the second electrode tab may be positioned on the left end side of the electrode assembly. The terms "left" and "right" are used herein for ease of description with reference to the secondary battery illustrated in FIG. 2, and the positions may change as the secondary battery is rotated left and right or up and down.

In some embodiments, an electrolyte inlet 130 may be provided on a first cap plate 360. Electrolyte may be injected into the case 200 through the electrolyte inlet 130. In FIG. 1, the electrolyte inlet 130 is illustrated as being provided on the first cap plate 360, but the present disclosure is not limited to such a configuration. After the electrolyte injection is complete, the electrolyte inlet 130 may be sealed using a sealing means such as a stopper.

In some embodiments, a vent 110 may be provided on a first side of the case 200. For example, the vent 110 may be provided on a lower surface of the case 200. Herein, the lower surface may refer to a surface facing downward in a case where the secondary battery is installed. The vent 110 may prevent the secondary battery from exploding or prevent a chain exothermic reaction of secondary batteries arranged in close proximity. For example, the vent 110 may be configured to open when the internal pressure of the secondary battery exceeds a predetermined critical pressure. The critical pressure may be set differently depending on the application, material, purpose, and the like of the secondary battery. In another example, the vent 110 may be configured to be open when the internal temperature exceeds a predetermined critical temperature.

In FIG. 1, the vent 110 is illustrated as being a single vent provided at the center of one surface of the case 200, but the present disclosure is not limited to such a configuration. Any number of vents 110 may be provided at any positions in a first surface of the case 200. For example, two or more vents 110 may be provided on one surface of the case 200.

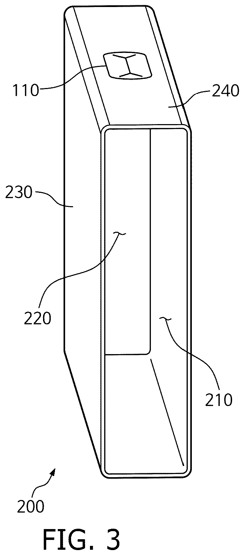

FIG. 3 illustrates a perspective diagram showing a case according to some embodiments of the present disclosure.

Referring to FIGS. 2 and 3, the case 200 may include long sidewalls 230 facing each other, short sidewalls 240 facing each other, an open first side 210, and an open second side 220.

As shown in the figures, a first direction X may refer to the X-axis direction. A second direction Y may be orthogonal to the first direction X. The second direction Y may refer to the Y-axis direction. A third direction Z may be respectively orthogonal to the first direction X and the second direction Y. The third direction Z may refer to the Z-axis direction.

The long sidewalls 230 may include a first long sidewall portion and a second long sidewall portion. The first long sidewall portion and the second long sidewall portion may face each other. More specifically, the first long sidewall portion and the second long sidewall portion may face each other while being spaced apart from each other in the second direction Y.

The short sidewalls 240 may include a first short sidewall portion and a second short sidewall portion. The first short sidewall portion and the second short sidewall portion may face each other. More specifically, the first short sidewall portion and the second short sidewall portion may face while being spaced apart from each other in the third direction Z. The area of each of the first short sidewall portion and the second short sidewall portion may be less than the area of each of the first long sidewall portion and the second long sidewall portion.

The open first side 210 and the open second side 220 may be formed on the opposite sides of the case 200. The open second side 220 may face the open first side 210. More specifically, the open second side 220 and the open first side 210 may face each other while being spaced apart from each other in the first direction X. Each of the open first and second sides 210 and 220 may refer to an open area.

The case 200 may be formed of a conductive metal, such as Al, an Al alloy, or Ni-plated steel.

The first cap plate 360 may cover the open first side 210 and be coupled to the case 200. A second cap plate 460 may cover the open second side 220 and be coupled to the case 200. In particular, each of the first cap plate 360 and the second cap plate 460 may be coupled to the case 200 by welding. The first cap plate 360 and the second cap plate 460 may seal the case 200.

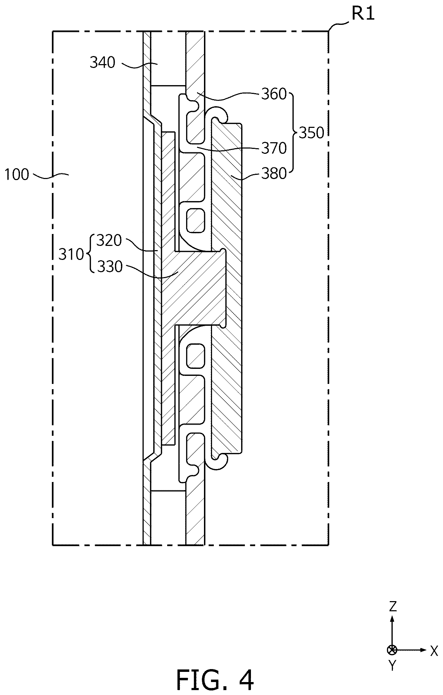

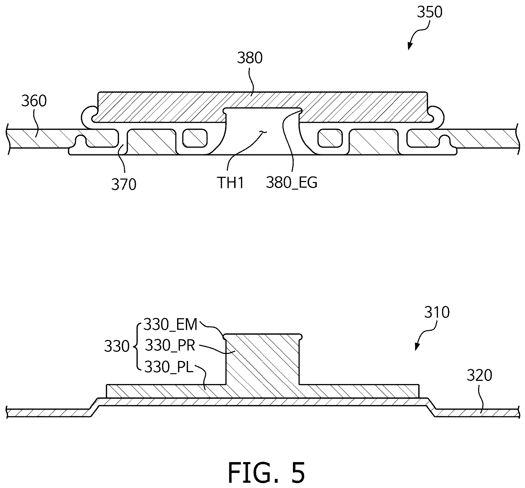

FIG. 4 illustrates an enlarged diagram showing a region R1 in FIG. 2. FIG. 5 illustrates a diagram in which the first cap assembly and the first subplate assembly in FIG. 4 are separated from each other.

Referring to FIG. 4, the first subplate assembly 310 and the first cap assembly 350 may be coupled to a first side of the electrode assembly 100.

The first subplate assembly 310 may be coupled to the first side of the electrode assembly 100 and be electrically connected to the first electrode plate (e.g., the positive electrode plate) of the electrode assembly 100. The first subplate assembly 310 may include the first subplate 320 and the first current collector 330.

The first subplate 320 may be coupled to a first electrode tab of the electrode assembly 100. For example, the first electrode tab may be coupled to the first subplate 320 by welding. The first subplate 320 may be connected to the first electrode tab and electrically connected to the first electrode plate.

The first current collector 330 may be coupled to the first subplate 320. For example, the first current collector 330 and the first subplate 320 may be coupled to each other by welding. The first current collector 330 and the first subplate 320 may be electrically connected to each other.

A first insulation member 340 may be positioned between the first subplate assembly 310 and the first cap assembly 350. The first insulation member 340 may prevent the first subplate 320 and the first cap plate 360 from contacting each other.

Referring to FIG. 5, the first current collector 330 may include a first planar portion 330_PL, a first protruding portion 330_PR, and a first tab portion 330_EM. The first planar portion 330_PL may be coupled to the first subplate 320 by welding. The first protruding portion 330_PR may protrude from the first planar portion 330_PL. The first protruding portion 320_PR may have the shape of a cylinder.

The first tab portion 330_EM may be formed on a side of the first protruding portion 330_PR. The first tab portion 330_EM may have the shape of a ring. For example, the first tab portion 330_EM may be a ring-shaped portion protruding from the side of the first protruding portion 330_PR. The diameter of the first protruding portion 330_PR may be less than the diameter of the first tab portion 330_EM.

In some embodiments, the first tab portion 330_EM may be provided on a first end of the first protruding portion 330_PR. For example, the first tab portion 330_EM may be provided on top of a side of the first protruding portion 330_PR. However, the present disclosure is not limited to such a configuration.

The first cap assembly 350 may include a first cap plate 360, a first sealing member 370, and a first terminal plate 380.

The first cap plate 360 may include a first through-hole TH1. The first sealing member 370 may be coupled to the first cap plate 360. in particular, the first sealing member 370 may provide a seal between the first terminal plate 380 and the first cap plate 360. The first sealing member 370 may include an insulating material such that the first sealing member 370 may insulate the first cap plate 360 and the first terminal plate 380 from each other.

The first terminal plate 380 may be coupled to the first sealing member 370. The first terminal plate 380 may be a positive electrode terminal of a secondary battery. A busbar may be welded onto the first terminal plate 380 and be electrically connected to another secondary battery.

The first terminal plate 380 may include a first recess portion 380_EG. The first recessed portion 380_EG may be in a shape of recess that corresponds to the first tab portion 330_EM.

The first current collector 330 may be coupled to the first terminal plate 380. Specifically, the first protruding portion 330_PR may extend through a first through-hole TH1, and the first tab portion 330_EM and the first recessed portion 380_EG may be coupled to each other. For example, the first tab portion 330_EM may be fitted into the first recessed portion 380_EG. Because the first recessed portion 380_EG has a groove shape corresponding to the first tab portion 330_EM, the first current collector 330 and the first terminal plate 380 may be fixedly coupled to each other.

As shown in FIG. 4, in a case where the first subplate assembly 310 and the first cap assembly 350 are coupled to each other, the upper surface of the first protruding portion 330_PR may contact the first terminal plate 380. The first terminal plate 380 may cover the upper surface of the first protruding portion 330_PR. The first terminal plate 380 may completely cover the upper surface of the first protruding portion 330_PR. The first protruding portion 330_PR and the first terminal plate 380 may be welded. For example, a weld area may be formed on the upper surface of the first terminal plate 380. A welding process may be performed in the welding area, thereby coupling the first terminal plate 380 and the first current collector 330 to each other. Accordingly, the first current collector 330 and the first terminal plate 380 may be electrically connected. A welding bead or the like may be formed on the welding area as a result of the welding process.

Secondary batteries may be manufactured by inserting an electrode assembly into a case and welding a cap plate to opposite sides of the case. In such a secondary battery manufacturing process, a defect in which the terminal plate and the current collector are not tightly fitted to each other may occur. When the terminal plate and current collector are welded without a tight fit, the electrical characteristics of the secondary battery may be reduced. Accordingly, the reliability of the secondary battery may be reduced.

In some embodiments of the present disclosure, the first terminal plate 380 includes the first recessed portion 380_EG, and the first current collector 330 includes the first tab portion 330_EM. Because the first tab portion 330_EM is fitted into the first recessed portion 380_EG, the first terminal plate 380 and the first current collector 330 are in close contact. That is, the upper surface of the first current collector 330 may contact the first terminal plate 380. Accordingly, the electrical characteristics of the secondary cell may be maintained, and the reliability of the secondary cell may be improved.

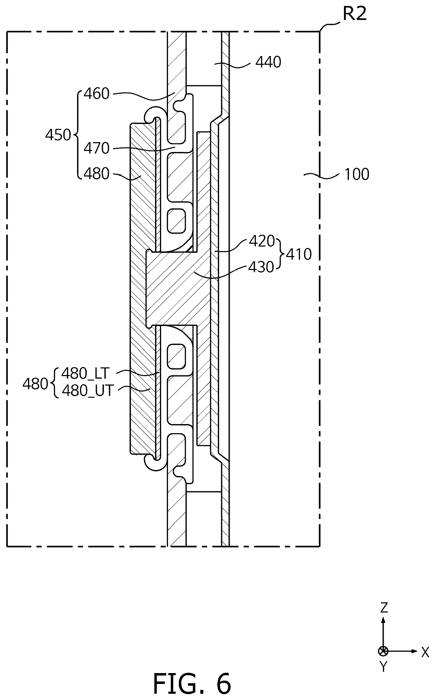

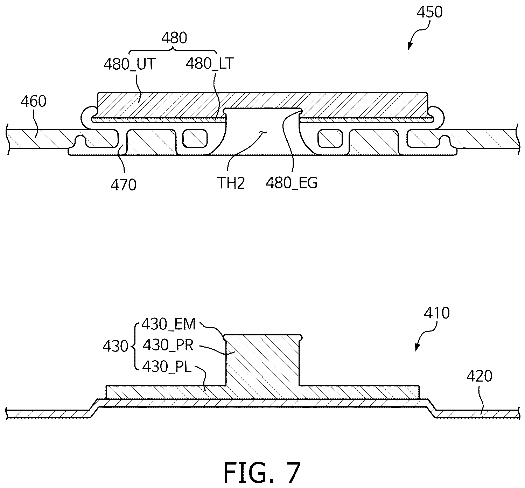

FIG. 6 illustrates an enlarged diagram showing a region R2 in FIG. 2. FIG. 7 illustrates a diagram in which the second cap assembly and the second subplate in FIG. 6 are separated from each other.

Referring to FIG. 6, the second subplate assembly 410 and the second cap assembly 450 may be coupled to the second side of the electrode assembly 100. The second subplate assembly 410 may be coupled to the second side of the electrode assembly 100 and electrically connected to a second electrode plate (e.g., a negative electrode plate) of the electrode assembly 100. The second first subplate assembly 410 may include a second first subplate 420 and a second current collector 430.

The second first subplate 420 may be coupled to a second electrode tab of the electrode assembly 100. For example, the second electrode tab may be coupled to the second subplate 420 by welding. The second subplate 420 may be connected to the second electrode tab, and may be electrically connected to the second electrode plate.

The second current collector 430 may be coupled to the second first subplate 420. For example, the second current collector 430 and the second first subplate 420 can be coupled to each other by welding. The second current collector 430 may be electrically connected to the second first subplate 420.

A second insulation member 440 may be positioned between the second subplate assembly 410 and the second cap assembly 450. The second insulation member 440 may prevent the second subplate 420 and the second cap plate 460 from contacting each other.

Referring to FIG. 7, the second current collector 430 may include a second planar portion 430_PL, a second protruding portion 430_PR, and a second tab portion 430_EM. The second planar portion 430_PL may be coupled to the second first subplate 420 by welding. The second protruding portion 430_PR may protrude from the second planar portion 430_PL. The second protruding portion 430_PR may have the shape of a cylinder.

The second tab portion 430_EM may be provided on a side of the second protruding portion 430_PR. The second tab portion 430_EM may have the shape of a ring. For example, the second tab portion 430_EM may be a ring-shaped portion protruding from the side of the second protruding portion 430_PR. The diameter of the second protruding portion 430_PR may be less than the diameter of the second tab portion 430_EM.

In some embodiments, the second tab portion 430_EM may be provided on a first end of the second protruding portion 430_PR. For example, the second tab portion 430_EM may be provided on top of a side of the second protruding portion 430_PR. However, the present disclosure is not limited to such a configuration.

The second cap assembly 450 may include the second cap plate 460, a second sealing member 470, and a second terminal plate 480.

The second cap plate 460 may include a second through-hole TH2. The second sealing member 470 may be coupled to the second cap plate 460. The second sealing member 470 may provide a seal between the second terminal plate 480 and the second cap plate 460. The second sealing member 470 may include an insulating material such that the second sealing member 470 may insulate the second cap plate 460 and the second terminal plate 480 from each other.

The second terminal plate 480 may be coupled to the second sealing member 470. The second terminal plate 480 may be a negative electrode terminal of the secondary battery. A busbar may be welded onto the second terminal plate 480 to be electrically connected to another secondary battery.

The second terminal plate 480 may include an upper terminal plate 480_UT and a lower terminal plate 480_LT. The lower terminal plate 480_LT may be in contact with the second sealing member 470. The upper terminal plate 480_UT may be disposed on top of the lower terminal plate 480_LT. That is, the lower terminal plate 480_LT may be disposed between the sealing member 470 and the upper terminal plate 480_UT.

The upper terminal plate 480_UT and the lower terminal plate 480_LT may be formed from different materials. For example, the lower terminal plate 480_LT may include copper (Cu) and the upper terminal plate 480_UT may include aluminum (Al). However, the present disclosure is not limited thereto. The upper terminal plate 480_UT and the lower terminal plate 480_LT may include other conductive metals.

The second terminal plate 480 may include a second recessed portion 480_EG. The second recessed portion 480_EG may be formed inside the upper terminal plate 480_UT. The second recessed portion 480_EG may be in a shape that corresponds to the secondtab portion 430_EM.

The second current collector 430 may be coupled to the second terminal plate 480. Specifically, the second protruding portion 430_PR may extend through each of the second through-hole TH2 and the lower terminal plate 480_LT, and the second tab portion 430_EM and the second recessed portion 480_EG may be coupled to each other. For example, the second tab portion 430_EM may be fitted into the second recessed portion 480_EG. Because the second recessed portion 480_EG has a groove shape corresponding to the second tab portion 430_EM, the second current collector 430 and the second terminal plate 480 may be fixedly coupled to each other.

When the second first subplate and assembly 410 and the second cap assembly 450 are coupled to each other as in FIG. 6, the upper surface of the second protruding portion 430_PR may contact the upper terminal plate 480_UT. The upper terminal plate 480_UT may cover the upper surface of the second protruding portion 430_PR. The upper terminal plate 480_UT may completely cover the upper surface of the second protruding portion 430_PR. The second protruding portion 430_PR and the upper terminal plate 480_UT may be welded. For example, a weld area may be formed on the upper surface of the upper terminal plate 480_UT. The upper surface of the upper terminal plate 480_UT may be the upper surface of the second terminal plate 480. A welding process may be performed in the welding area, such that the second terminal plate 480 and the second current collector 430 may be coupled to each other. Accordingly, the second current collector 430 and the second terminal plate 480 may be electrically connected. A welding bead or the like may be formed on the welding area as a result of the welding process.

According to some embodiments of the present disclosure, the second terminal plate 480 includes a second recessed portion 480_EG and the second current collector 430 includes a second tab portion 430_EM. Because the second tab portion 430_EM is fitted into the second recessed portion 480_EG, the second terminal plate 480 and the second current collector 430 are in close contact. That is, the upper surface of the second current collector 430 may contact the second terminal plate 480. Accordingly, the electrical characteristics of the secondary cell may be stably maintained, and the reliability of the secondary battery may be improved.

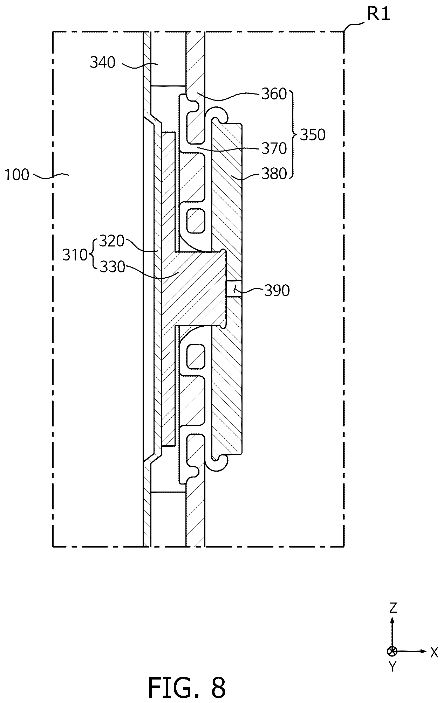

FIG. 8 illustrates the secondary battery according to some embodiments of the present disclosure. For reference, FIG. 8 illustrates an enlarged diagram showing the region R1 in FIG. 2. For ease of description, the following description will focus on features other than those described above with reference to FIG. 4.

Referring to FIG. 8, the first terminal plate 380 may include a hole 390. A portion of the upper surface of the first current collector 330 is exposed through the hole 390. The hole 390 may be formed in a portion where the first terminal plate 380 and the first current collector 330 overlap in a first direction X. For example, the hole 390 may be formed at the center of the portion where the first terminal plate 380 and the first current collector 330 overlap in the first direction X.

The first current collector 330 and the first terminal plate 380 may be welded. For example, a welding area may be formed on the upper surface of the first terminal plate 380. The welding area may be formed around the hole 390. A welding process may be performed on the welding area to join the first terminal plate 380 and the first current collector 330. Accordingly, the first current collector 330 and the first terminal plate 380 may be electrically connected to each other. A welding bead or the like may be formed on the welding area as a result of the welding process.

For ease of illustration, only the first terminal plate 380 is shown, but a hole may be similarly formed in the second terminal plate (480 in FIG. 6).

In the secondary battery manufacturing process, a defect in which the cap plate and current collector do not tightly fit may occur. According to some embodiments of the present disclosure, the first terminal plate 380 may include a hole 390, and through the hole 390 the fit between the cap plate and current collector may be checked. Accordingly, defects may be reduced in the process of manufacturing a secondary battery.

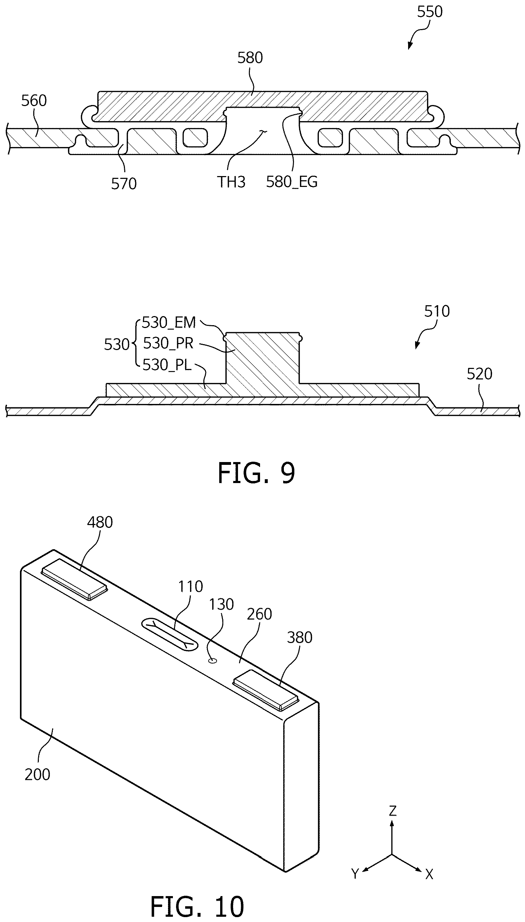

FIG. 9 illustrates the secondary battery according to some embodiments of the present disclosure. For ease of description, the following description will focus on features other than those described above with reference to FIG. 5.

Referring to FIG. 9, a third cap assembly 550 may include a third cap plate 560, a third sealing member 570, and a third terminal plate 580. A third subplate assembly 510 may include a third subplate 520 and a third current collector 530. Descriptions of the third cap assembly 550 and the third current collector 530 may be similar to the descriptions of the first cap assembly 350 and the first current collector 330, respectively, in FIG. 5. Accordingly, the following description will focus on differences from the descriptions above.

The third current collector 530 may include a third planar portion 530_PL, a third protruding portion 530_PR, and a third tab portion 530_EM. The third planar portion 530_PL may be coupled to the third subplate 520 by welding. The third protruding portion 530_PR may protrude from the third planar portion 530_PL. The third protruding portion 53O_PR may have a cylindrical shape.

The third tab portion 530_EM may be provided on a side of the third protruding portion 530_PR. The third tab portion 530_EM may have a ring shape. For example, the third tab portion 530_EM may be a ring-shaped portion protruding from a side of the third protruding portion 530_PR. The diameter of the third protruding portion 530_PR may be less than the diameter of the third tab portion 530_EM.

The third tab portion 530_EM may be provided on a portion spaced apart from a first side of the third protruding portion 530_PR. For example, the third tab portion 530_EM may be provided on a portion spaced apart from the upper surface of the third protruding portion 530_PR.

The third terminal plate 580 may include a third recessed portion 580_EG. The third recessed portion 580_EG may be shaped to correspond to the shape of the third tab portion 530_EM.

A third current collector 530 may be coupled to a third terminal plate 580. Specifically, the third protruding portion 530_PR may extend through a third through-hole TH3, and the third tab portion 530_EM and the third recessed portion 580_EG may be coupled to each other. For example, the third tab portion 530_EM may be fitted into the third recessed portion 580_EG. Because the third recessed portion 580_EG is shaped to correspond to the shape of the third recessed portion 530_EM, the third current collector 530 and the third terminal plate 580 may be fixedly coupled to each other.

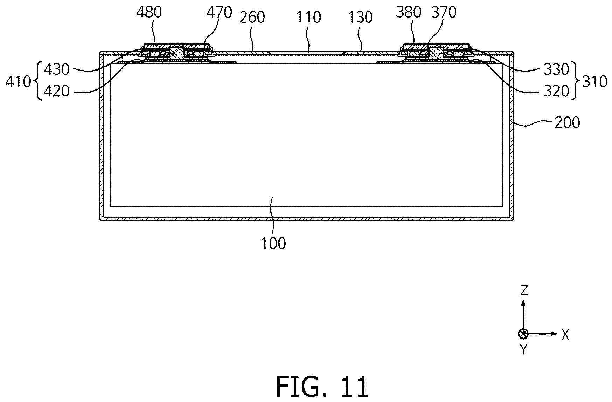

FIG. 10 illustrates a perspective diagram showing a secondary battery according to some embodiments of the present disclosure. FIG. 11 illustrates a cross-sectional diagram showing the secondary battery according to some embodiments of the present disclosure.

Referring to FIGS. 10 and 11, the secondary battery may include an electrode assembly 100, a case 200 accommodating the electrode assembly, a third cap plate 260, a first subplate assembly 310, a second subplate assembly 410, a first terminal plate 380, and a second terminal plate 480.

The electrode assembly 100 may be accommodated within the case 200. The electrode assembly 100 may include a first electrode plate, a separator, and a second electrode plate. The first electrode plate may include a first electrode tab. The second electrode plate may include a second electrode tab. In some embodiments, each of the first electrode tab and the second electrode tab are positioned on an upper side of the electrode assembly. The term "upper side" is used herein for ease of description with reference to the secondary battery shown in FIG. 10, but the position thereof may change when the secondary battery is rotated left and right or up and down.

The electrolyte inlet 130 may be provided on the third cap plate 260. Electrolyte may be injected into the case 200 through the electrolyte inlet 130. After the electrolyte injection is complete, the electrolyte inlet 130 may be sealed using a sealing means, such as a stopper or the like.

In some embodiments, the vent 110 may be provided on the third cap plate 260, but the present disclosure is not limited to such a configuration. For example, the vent 110 may be provided on the lower surface of the case 200. Herein, the lower surface of the case 200 may be a side opposite the third cap plate 260 in the third direction Z. The vent 110 may prevent the secondary battery from exploding or prevent a chain exothermic reaction of secondary batteries arranged in close proximity.

The case 200 may include a third side that is open in the third direction Z. The third cap plate 260 may be coupled to the surface of the case 200 at the open third side to seal the secondary battery.

The first subplate assembly 310 may be coupled to the surface of the first electrode tab of the electrode assembly 100. The first subplate assembly 310 may include the first subplate 320 and the first current collector 330. The first subplate 320 may be coupled to the first electrode tab by welding, and the first current collector 330 may be coupled to the first subplate 320 by welding. The first current collector 330 may include a first planar portion, a first protruding portion, and a first tab portion. Descriptions of the first subplate 320 and the first current collector 330 may be the same as those described with reference to FIGS. 4 and 5.

The second subplate assembly 410 may be coupled to the surface of the second electrode tab of the electrode assembly 100. The second subplate assembly 410 may include the second subplate 420 and the second current collector 430. The second subplate 420 may be coupled to the second electrode tab by welding, and the second current collector 430 may be coupled to the second subplate 420 by welding. The second current collector 430 may include a second planar portion, a second protruding portion, and a second tab portion. Descriptions of the second first subplate 420 and the second current collector 430 may be the same as those described with reference to FIGS. 6 and 7.

The third cap plate 260 may be coupled to the surfaces of the first subplate assembly 310 and second subplate assembly 410. The first sealing member 370 may be coupled to the surface of the third cap plate 260, and the first terminal plate 380 may be coupled to the surface of the first sealing member 370. The first terminal plate 380 may include a first recessed portion. The first terminal plate 380 may be electrically connected to the first current collector 330. Descriptions of the first sealing member 370 and the first terminal plate 380 may be the same as those described above with reference to FIGS. 4 and 5.

The second sealing member 470 may be coupled to the surface of the third cap plate 260, and the second terminal plate 480 may be coupled to the surface of the second sealing member 470. The second terminal plate 480 may include a second recessed portion. The second terminal plate 480 may be electrically connected to the second current collector 430. Descriptions of the second sealing member 470 and the second terminal plate 480 may be the same as those described above with reference to FIGS. 4 and 5.

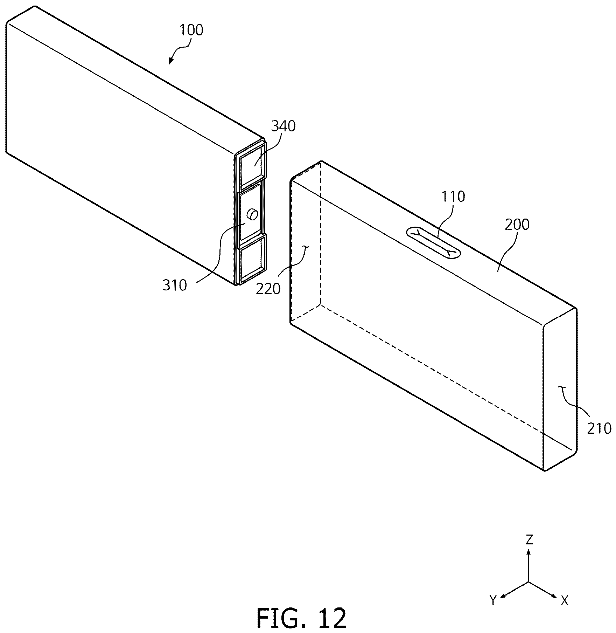

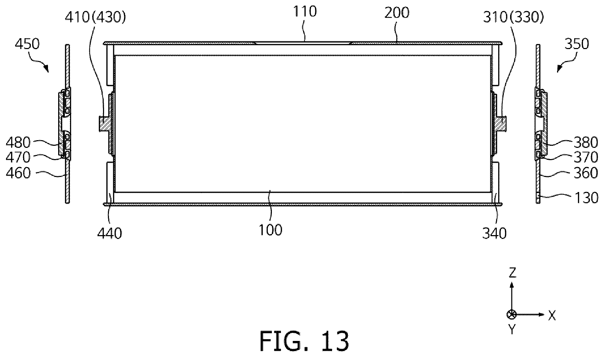

FIGS. 12 and 13 illustrate a method of manufacturing a secondary battery according to some embodiments of the present disclosure.

Referring to FIG. 12, the electrode assembly 100 may be inserted into the case 200.

The electrode assembly 100 including the first subplate assembly 310 and the first insulation member 340 may be coupled to a first side and the second subplate assembly (not shown) and the second insulation member (not shown) may be coupled on a second side. The case 200 may include the vent 110, the open first side 210, and the open second side 220. The electrode assembly 100 may be inserted through the open second side 220 in the first direction X and received in the case 200.

Referring to FIG. 13, the first cap assembly 350 may be coupled to the surface of the first subplate assembly 310, and the second cap assembly 450 may be coupled to the surface of the second subplate assembly 410.

Specifically, as described above with reference to FIG. 5, the first current collector 330 and the first terminal plate 380 may be fitted to each other. Subsequently, the first current collector 330 and the first terminal plate 380 may be welded, and the case 200 and the first cap plate 360 may be welded. However, the welding sequence is not limited.

As described above with reference to FIG. 7, the second current collector 430 and the second terminal plate 480 may be fitted to each other. Subsequently, the second current collector 430 and the second terminal plate 480 may be welded, and the case 200 and the second cap plate 460 may be welded. However, the welding sequence is not limited.

It has been described above that the first cap assembly 350 is coupled to the first subplate assembly 310 and the second cap assembly 450 is coupled to the second first subplate assembly 410, but the present disclosure is not limited in this regard. For example, the order may be changed, and the first cap assembly 350 and the second cap assembly 450 may be coupled at substantially the same time.

Although the present disclosure has been described above with respect to embodiments thereof, the present disclosure is not limited thereto. Various modifications and variations can be made thereto by those skilled in the art within the equivalent scope of the appended claims.

### <Description of Reference Symbols>

| | | | |
|---|---|---|---|
| 100: | electrode assembly | 200: | case |
| 310: | first subplate assembly | 320: | first subplate |
| 330: | first current collector | 330_PL: | first planar portion |
| 330_PR: | first protruding portion | 330_EM: | first tab portion |
| 340: | first insulation member | 350: | first cap assembly |
| 360: | first cap plate | 370: | first sealing member |
| 380: | first terminal plate | 380_EG: | first recessed portion |
| 410: | second first subplate assembly | 420: | second first subplate |
| 430: | second current collector | 430_PL: | second planar portion |
| 430_PR: | second protruding portion | 430_EM: | second tab portion |
| 440: | second insulation member | 450: | second cap assembly |
| 460: | second cap plate | 470: | second sealing member |
| 480: | second terminal plate | 480_EG: | second recessed portion |

## Claims

1. A secondary battery comprising:
an electrode assembly (100);
a subplate (320) connected to the electrode assembly (100);
a current collector (330) including a planar portion coupled to the subplate (320), a protruding portion (330_PR) protruding from the planar portion (330_PL), and a tab portion (330_EM) provided on a side surface of the protruding portion (330_PR); and
a terminal plate (380) including a recessed portion (380_EG) that is shaped to correspond to a shape of the tab portion (330_EM).

2. The secondary battery as recited in claim 1, wherein the tab portion (330_EM) and the recessed portion (380_EG) are fitted to each other.

3. The secondary battery as recited in claim 1 or 2, wherein an upper surface of the protruding portion (330_PR) is in contact with the terminal plate (380).

4. The secondary battery as recited in any of the preceding claims, wherein an upper surface of the terminal plate (380) comprises an area welded with the protruding portion (330_PR).

5. The secondary battery as recited in any of the preceding claims, wherein the protruding portion (330_PR) has a cylindrical shape, the tab portion (330_EM) has a ring shape, and
wherein a diameter of the protruding portion (330_PR) is less than a diameter of the tab portion (330_EM).

6. The secondary battery as recited in any of the preceding claims, wherein the terminal plate (380) covers an upper surface of the protruding portion (330_PR).

7. The secondary battery as recited in any of the preceding claims, wherein a hole is formed in the terminal plate (380), and a portion of an upper surface of the protruding portion (330_PR) is exposed through the hole.

8. The secondary battery as recited in any of the preceding claims, further comprising:
a case (200) accommodating the electrode assembly (100), the case 200 including an open first side and an open second side opposite the first side;
a first cap plate (360) covering the first side of the case (200); and
a second cap plate (460) covering the second side,
wherein a through-hole (TH1) is formed the first cap plate (360) and
wherein the protruding portion (330_PR) extends through the through-hole (TH1).

9. The secondary battery as recited in claim 8, wherein the case (200) comprises:
a first long sidewall (230) and a second long sidewall (230) facing each other and spaced apart from each other;
a first short sidewall (240) and a second short sidewall (240) facing each other and spaced apart from each other,
wherein areas of the first and second short sidewalls (240) are less than areas of the first and second long sidewalls (230).

10. The secondary battery as recited in claim 8 or 9, further comprising:
a second subplate assembly (410) electrically connected to one side of the electrode assembly (100);
a second cap assembly (450) covering the second side and coupled to the second subplate assembly (410),
,wherein the terminal plate (380) and the cap plate (360) are included in a first cap assembly (350) covering the first side of the case (200) and coupled to the first subplate assembly (310), and
the subplate (320) is included in a first subplate assembly (310) electrically connected to the other side of the electrode assembly (100).

11. The secondary battery as recited in claim 10 wherein the second cap assembly (450) comprises a second terminal plate (480) coupled to the second cap plate (460), the second terminal plate (480) including a second recessed portion (480_EG),
wherein the second subplate assembly (410) comprises a second subplate (420) connected to the electrode assembly (100), and
a second current collector (430) coupled to a surface of the second subplate (420),
wherein the second current collector (430) comprises a second planar portion (430_P) coupled to the second subplate (420). a second protruding portion (430_PR) protruding from second planar portion (430_P) and a second tab portion (430_EM) provided on a side surface of the second protruding portion (430_PR), and
wherein the second tab portion (430_EM) is coupled to the second recessed portion (480_EG).

12. The secondary battery as recited in claim 11, wherein the second terminal plate (480) comprises an upper terminal plate (480_UT) and a lower terminal plate (480_LT), and
wherein the upper terminal plate (480_UT) and the lower terminal plate (480_LT) comprise different materials.

13. The secondary battery as recited in claim 11 or 12, wherein the second terminal plate (480) comprises an upper terminal plate (480_UT) and a lower terminal plate (480_LT), and
wherein the second recessed portion (480_EG) is provided inside the upper terminal plate (480_UT).

14. The secondary battery as recited in any of claims 11 to 13, wherein the second terminal plate (480) comprises an upper terminal plate (480_UT) and a lower terminal plate (480_LT), and
wherein the second protruding portion (430_PR) extends through the lower terminal plate (480_LT).

15. The secondary battery as recited in any of claims 10 to 14, wherein the cap assembly (350, 450) further comprises a sealing member (370, 470) disposed between the cap plate (360, 460) and the terminal plate (380, 480).
